# EUROPÄISCHE PATENTSCHRIFT

(11) **EP 0 649 788 B1**
(45) Veröffentlichungstag und Bekanntmachung des Hinweises auf die Patenterteilung: **08.01.1997**
(21) Anmeldenummer: 94115802.4
(22) Anmeldetag: 07.10.1994
(51) Int. Cl.: B64F 1/26

(54) **Vorrichtung zur Abschwächung von Ansaugwirbeln an Turbinentriebwerken**
Device for the reduction of the vortex in a turbo engine air intake
Dispositif de réduction des tourbillons à l'entrée d'un turboréacteur

(30) Priorität: 21.10.1993 DE 4335872
(43) Veröffentlichungstag der Anmeldung: 26.04.1995
(73) Patentinhaber: Rheinhold & Mahla AG, 80992 München (DE)
(72) Erfinder: Schafhaupt, Horst, D-82281 Egenhofen (DE); Ballmann, Josef, D-52076 Aachen (DE)
(74) Vertreter: Rau, Manfred, Dr. Dipl.-Ing.

(56) Entgegenhaltungen:
- EP-A- 0 542 590
- CH-A- 395 752
- DE-A- 2 213 352
- DE-A- 3 722 112
- US-A- 2 685 936
- US-A- 3 698 509
- US-A- 4 258 823

## Beschreibung

Die Erfindung bezieht sich auf eine Vorrichtung zur Abschwächung von Ansaugwirbeln an Strahl-Triebwerken mit Turbo-Verdichtern von Flugzeugen, insbesondere bei Testläufen.

Zur Routineüberpüfung der Strahl-Triebwerke eines Flugzeuges sind Probeläufe im Stand am Boden erforderlich, bei denen die Triebwerke bis an ihre Leistungsgrenze belastet werden. Dazu geben die Flugzeughersteller in Abhängigkeit von der Windrichtung relativ zur Flugzeugachse Obergrenzen für die Windgeschwindigkeit an, die bei Probeläufen zu beachten sind. Die Notwendigkeit dieser Einschränkungen resultiert aus der Tatsache, daß sich im Ansaugstrom des Triebwerks bei ungünstigen Windverhältnissen sehr starke Störungen des Geschwindigkeitsfeldes durch großräumige Wirbelstrukturen einstellen, insbesondere durch einen vom Boden ausgehenden konzentrierten starken Einzelwirbel, der Störungen des Triebwerkprozesses mit möglichen Lebensdauerverkürzungen des Triebwerks verursachen kann. Deshalb stellt man das Flugzeug für den Triebwerkstest in den Wind, so daß die Triebwerke möglichst axial von vorn angeströmt werden.

Oft ist die Stellrichtung des Flugzeuges auf dem Testplatz vorgegeben, z.B. immer dann, wenn eine mit dem Boden fest verbundene Lärmschutzanlage vorhanden ist, wie sie beispielsweise in der DE 37 22 112 A1 (entsprechend US-PS 4 958 700) beschrieben ist. Bei deren Bau kann oft die vorherrschende Windrichtung am Aufstellort nicht berücksichtigt werden, sondern es ist eine bereits vorhandene Bebauung für den beabsichtigten Lärmschutz ausschlaggebend. Die Zahl der unter diesen Voraussetzungen durchzuführenden Tests kann dabei jedoch erheblich eingeschränkt sein, weil die genannten Wirbelstrukturen aufgrund ungünstiger Anströmung bzw. naher Wände oder Kanten der Lärmschutzeinrichtung leichter entstehen und eine größere Stärke entfalten können.

Die vom Turbo-Verdichter eines Triebwerks angesaugte Luftmenge ist typenabhängig, wobei die Luftgeschwindigkeit im Ansaugstrom lokal deutlich über 100 m/s liegen kann. In dieser Ansaugströmung bildet sich in der Regel ein konzentrierter Wirbel, um dessen Achse die angesaugten Luftmassen rotieren. Der Wirbel kann zunächst von einer nahen Kante, einer nahen Wand oder auch vom Boden ausgehen. Seine Achse kann vom Entstehungsort bis in den Triebwerk-Einlauf hinein sichtbar gemacht werden. Dieser Wirbel verhält sich dabei nicht stationär, sondern sein Ausgangspunkt wandert, seine Achse verformt sich und auch der Ort des Eintritts in das Triebwerk verändert sich. In der Regel stabilisiert sich jedoch kurz nach der Entstehung der Bewegungsbereich des konzentrierten Wirbels auf ein begrenztes Gebiet vor dem Triebwerk, wobei der Ausgangspunkt des Wirbels in der Bodengrenzschicht vor dem Triebwerk-Einlauf hin- und herwandert. Zu dieser Zeit erreicht der Wirbel seine größte Stärke. Die Stärke des Wirbels ist aber die maßgebliche Größe für Störungen im Verdichter des Triebwerks in Form von Strömungsablösungen und von kritischen Zuständen in der Brennkammer des Triebwerks, die eine Notabschaltung des Triebwerks zur Folge haben können.

Der vorliegenden Erfindung liegt daher die Aufgabe zugrunde, eine Vorrichtung zu schaffen, mit deren Hilfe die vorgenannten kritischen Zustände vermieden bzw. in der Häufigkeit ihres Auftretens vermindert werden können.

Diese Aufgabe wird von der Vorrichtung gemäß Anspruch 1 gelöst. Durch einen derartigen Gitterrost als Strömungsgitter wird die Konzentration des Wirbels bereits im Entstehungsbereich an der Bodengrenzschicht entscheidend behindert. Überraschenderweise hat sich gezeigt, daß die Anordnung eines solchen Gitterrostes zu einer Behinderung der Bildung eines Wirbels und damit zu einer Verbesserung der Anströmverhältnisse führt und daß nicht - wie zu erwarten war - der üblicherweise an solchen Testplätzen vorhandene glatte Beton zu einer Verbesserung der Anströmverhältnisse führt. Durch die erfindungsgemäße Dimensionierung der Höhe der Strömungskanäle und der Weite der Maschen entsteht nur noch eine verteilte, kleinstrukturierte Wirbeligkeit, deren Konzentration zu einem starken Einzelwirbel bis zum Triebwerk-Einlauf nicht mehr stattfinden kann.

Zweckmäßig ist es dabei, wenn der Gitterrost eine halbkreisförmige Gestalt mit einem Radius aufweist, der dem doppelten Durchmesser des Triebwerk-Einlaufs entspricht. Weiterhin liegt vorteilhafterweise der Mittelpunkt des Gitterrostes angenähert senkrecht unterhalb der Mitte des Triebwerk-Einlaufs.

Die Weite der Maschen des Gitterrostes sollte annähernd der Höhe der Maschen oder der Höhe des Gitterrostes entsprechen.

Eine Verstärkung der Wirkung des Gitterrostes kann dadurch erreicht werden, daß die Strömungskanäle des Gitterrostes eine nach oben vom Triebwerk weg weisende Achse aufweisen.

Den unterschiedlichen Höhen der Triebwerke über dem Boden kann durch einen einstellbaren Abstand des Gitterrostes vom Boden Rechnung getragen werden.

Anhand einer schematischen Zeichnung sind Aufbau und Funktionsweise eines Ausführungsbeispiels nach der Erfindung näher erläutert. Dabei zeigen
- Fig. 1: eine Aufsicht auf ein Flugzeug in einer Lärmschutzanlage mit Gitterrosten,
- Fig. 2: einen Längsschnitt durch einen auf dem Boden aufgestellten Gitterrost mit darüber angeordnetem Triebwerk-Einlauf in schematischer Darstellung,
- Fig. 3: eine Draufsicht auf eine genauere Darstellung eines Gitterrostes und
- Fig. 4: einen Vertikalschnitt durch den Gitterrost nach Fig. 3.

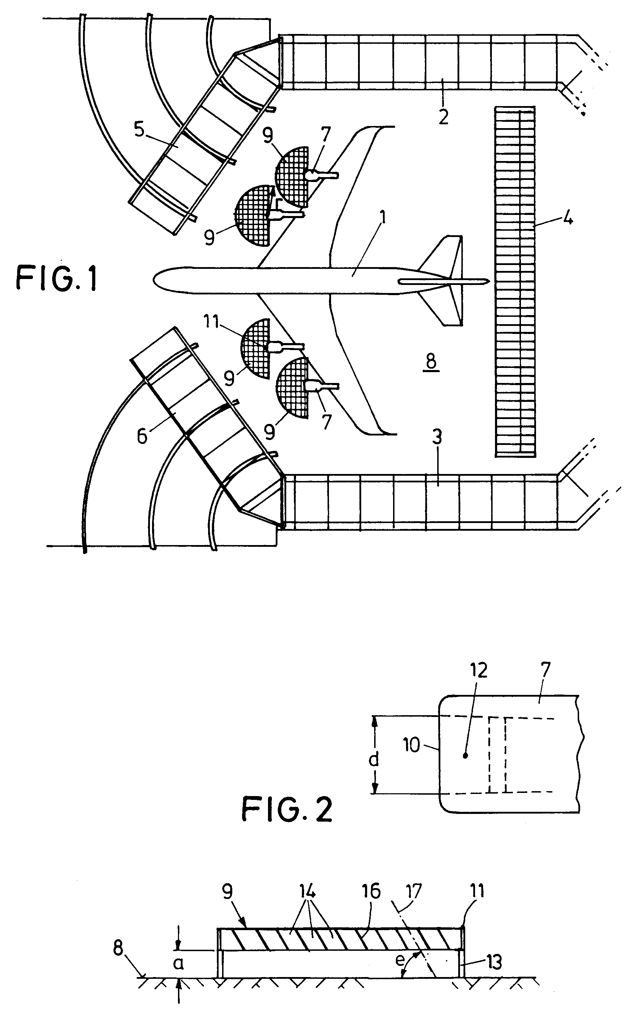

Wie aus Fig. 1 erkennbar ist, ist ein zum Probelauf bereitgestelltes Flugzeug 1 allseitig von einer Lärmschutzanlage umgeben, die beispielsweise aus der DE 37 22 112 A1 (entsprechend US-PS 4 958 700) bekannt ist und die seitliche Schallschutzwände 2 und 3, ein rückwärtiges Umlenkgitter 4 und schwenkbare, mit Schalldämmitteln belegte Schwenktore 5 und 6 aufweist.

Das Flugzeug 1 weist beispielsweise vier Strahl-Triebwerke 7 auf, die wie allgemein üblich einen Turbo-Verdichter und eine Brennkammer aufweisen. Unter den Triebwerken 7 sind jeweils in der Nähe des Bodens 8 Gitterroste 9 angeordnet. Diese Gitterroste 9 haben eine halbkreisförmige Gestalt und weisen einen Radius r auf, der dem doppelten Durchmesser d des Triebwerk-Einlaufs 10 entspricht. Für den Durchmesser d der Triebwerke 7 großer Flugzeuge 1, um die es sich in der Regel handelt, gilt üblicherweise 1,5 m ≤ d ≤ 2,5 m und insbesondere d ≃ 2 m. Demzufolge gilt für den Radius r des Gitterrostes 9 3 m < r < 5 m und insbesondere r ≃ 4 m. Der Mittelpunkt 11 dieser halbkreisförmigen Gitterroste 9 liegt dabei angenähert senkrecht unter der Mitte des Triebwerk-Einlaufs 10.

Aus Fig. 2 ist die Zuordnung des Gitterrostes 9 zum Triebwerk 7 zu erkennen. Dieser Gitterrost 9 ist über Stützen 13 in einem vorgegebenen Abstand a oberhalb des Bodens 8 angeordnet, wobei dieser Abstand a abhängig von der jeweiligen Höhe der Triebwerke 7 über dem Boden 8 einstellbar sein kann. Für den Abstand a gilt in der Praxis 50 mm ≤ a ≤ 200 mm und insbesondere a ≃ 100 mm.

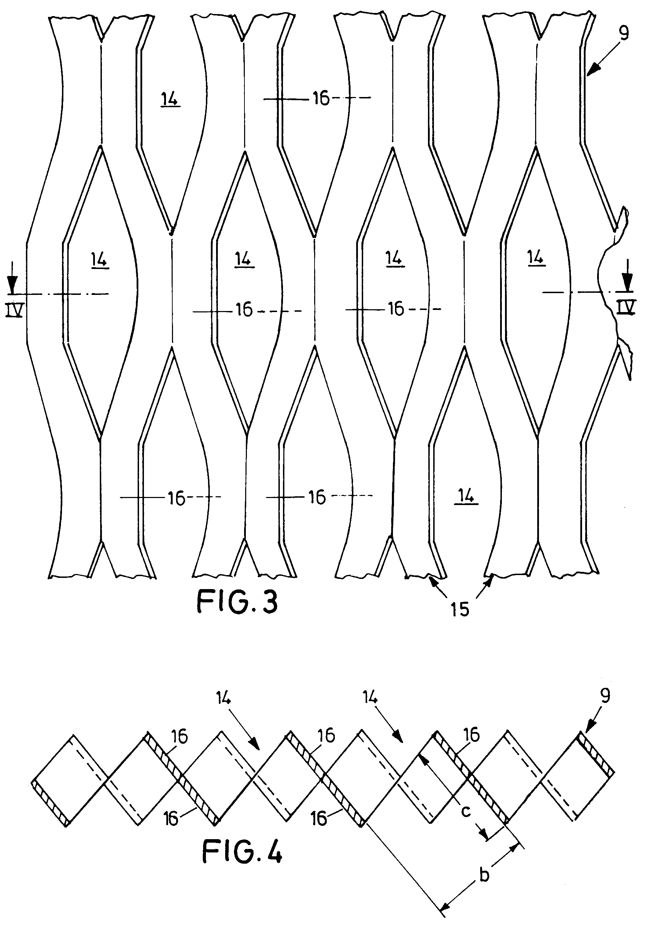

Dieser in den Fig. 3 und 4 genauer dargestellte Gitterrost 9 weist als kurze Strömungskanäle 14 ausgebildete Maschen 15 auf, wobei Weite b und Höhe c eines solchen Strömungskanals 14 ungefähr gleich groß sind.

Wie die Fig. 3 und 4 erkennen lassen, besteht der Gitterrost 9 aus sogenanntem Streckmetall, d.h. er ist durch Stanzen und Verformen von Blech hergestellt. Die durch die Verformung gebildeten Stege bilden Seitenwände 16 der Strömungskanäle 14, deren Mittel-Achse 17 gegenüber dem Boden 8 geneigt ist, und zwar um einen Winkel e der größer als 45° ist.

Um eine verteilte kleinstrukturierte Wirbeligkeit des aufsteigenden Wirbels zu erreichen und damit eine Konzentration zu einem starken Einzelwirbel bis zum Triebwerk-Einlauf 10 zu verhindern, sollte die Weite b und Höhe c eines solchen Strömungskanals 14 höchstens so groß sein wie die kleinsten Schaufelabstände des Verdichters des Triebwerks 7. Es gilt deshalb beispielsweise b ≃ 35 mm und c ≃ 30 mm.

Die beabsichtigte Wirkung einer Zerlegung eines starken Einzelwirbels in kleinstrukturierte Wirbel wird noch dadurch verstärkt, daß die Seitenwände 16 der Strömungskanäle 14 nicht senkrecht zum Boden 8 angeordnet sind, sondern daß die Mittel-Achse 17 der Strömungskanäle 14 schräg nach oben vom Triebwerk 7 weg gerichtet ist.

Durch die Anordnung derartiger Gitterroste 9 unterhalb der Triebwerk-Einläufe 10 kann somit die Entstehung starker Einströmwirbel verhindert oder zumindest stark vermindert werden. Dadurch kann auch die Verfügbarkeit derartiger Lärmschutzanlagen für die Triebwerkstests erheblich gesteigert werden. Dadurch wird die Akzeptanz dieser Lärmschutzanlagen durch die Nutzer gefördert und somit ein Beitrag zur Verminderung der Umweltbelastung geleistet.

## Patentansprüche

1. Vorrichtung zur Abschwächung von Ansaugwirbeln an Strahl-Triebwerken mit Turbo-Verdichtern von Flugzeugen, insbesondere bei Testläufen, dadurch gekennzeichnet, daß in der Nähe und oberhalb des Bodens (8) und unterhalb und unmittelbar vor dem Triebwerk-Einlauf (10) ein Gitterrost (9) mit durch dessen Maschen (15) gebildeten Strömungskanälen (14) angeordnet ist, wobei die Höhe (c) der Strömungskanäle (14) sowie die Weite (b) der Maschen (15) höchstens so groß sind wie die kleinsten Schaufelabstände des Turbo-Verdichters des Triebswerks (7) und wobei die Mittel-Achsen (17) der Strömungskanäle (14) gegenüber dem Boden (8) um einen Winkel (e) geneigt sind, der größer als 45° ist.

2. Vorrichtung nach Anspruch 1, dadurch gekennzeichnet, daß der Gitterrost (9) eine halbkreisförmige Gestalt mit einem Radius (r) aufweist, der dem doppelten Durchmesser (d) des Triebwerk-Einlaufs (10) entspricht.

3. Vorrichtung nach Anspruch 1 oder 2, dadurch gekennzeichnet, daß der Mittelpunkt (11) des Gitterrostes (9) angenähert senkrecht unter der Mitte (12) des Triebwerk-Einlaufs (10) liegt.

4. Vorrichtung nach einem der Ansprüche 1 bis 3, dadurch gekennzeichnet, daß die Weite (b) der Maschen (15) des Gitterrostes (9) annähernd der Höhe (c) der Maschen (15) oder der Höhe des Gitterrostes (9) entsprechen.

5. Vorrichtung nach einem der Ansprüche 1 bis 5, dadurch gekennzeichnet, daß der Abstand (a) des Gitterrostes (9) vom Boden (8) einstellbar ist.

6. Vorrichtung nach Anspruch 2, dadurch gekennzeichnet, daß für den Radius (r) des Gitterrostes (9) gilt: 3 m < r < 5 m.

7. Vorrichtung nach einem der Ansprüche 1 bis 7, dadurch gekennzeichnet, daß der Gitterrost (9) in einem Abstand (a) oberhalb des Bodens (8) angeordnet ist, für den gilt: 50 mm < a < 200 nun und vorzugsweise a ≃ 100 mm.

## Claims

1. Apparatus for diminishing intake vortexes in jet engines with turbo-compressors of aircrafts, in particular during test runs, characterized in that near and above the ground (8) and below and directly in front of the engine inlet (10), a grating (9) is disposed, having wind tunnels (14) which are formed by the meshes (15) of the grating (9), the height (c) of the wind tunnels (14) and the width (b) of the meshes (15) not exceeding a smallest blade distance of the turbo-compresssor of the engine (7) and the central axes (17) of the wind tunnels (14) being inclined relative to the ground (8) by an angle (e) of more than 45°.

2. Apparatus according to claim 1, characterized in that the grating (9) has a semi-circular shape of a radius (r) which corresponds to twice the diameter (d) of the engine inlet (10).

3. Apparatus according to claim 1 or 2, characterized in that the central point (11) of the grating (9) is approximately perpendicular below the center (12) of the engine inlet (10).

4. Apparatus according to one of claims 1 to 3, characterized in that the width (b) of the meshes (15) of the grating (9) corresponds approximately to the height (c) of the meshes (15) or the height of the grating (9).

5. Apparatus according to one of claims 1 to 4, characterized in that the distance (a) from the grating (9) to the ground (8) is adjustable.

6. Apparatus according to claim 2, characterized in that 3 m < r < 5 m applies to the radius (r) of the grating (9).

7. Apparatus according to one of claims 1 to 6, characterized in that the grating (9) is disposed at a distance (a) above the ground (8) to which applies 50 nun < a < 200 mm and preferably a ≅ 100 mm.

## Revendications

1. Dispositif d'atténuation de tourbillons d'aspiration à l'entrée de réacteurs d'avions équipés de turbocompresseurs, en particulier au cours de marches d'essai, dispositif caractérisé par le fait qu'un caillebotis (9), muni de canaux d'écoulement (14) formés par ses mailles (15), est placé à proximité et au-dessus du sol (8), et au-dessous et directement devant l'admission (10) du réacteur, la hauteur (c) des canaux d'écoulement (14), ainsi que la largeur (b) des mailles (15), étant au maximum égales aux distances minimales séparant les pales du turbocompresseur du réacteur (7), et les axes médians (17) des canaux d'écoulement (14) étant inclinés, par rapport au sol (8), selon un angle (e) excédant 45°.

2. Dispositif selon la revendication 1, caractérisé par le fait que le caillebotis (9) est de configuration semi-circulaire, présentant un rayon (r) correspondant au double du diamètre (d) de l'admission (10) du réacteur.

3. Dispositif selon la revendication 1 ou 2, caractérisé par le fait que le centre (11) du caillebotis (9) occupe une position approximativement perpendiculaire au-dessous du centre (12) de l'admission (10) du réacteur.

4. Dispositif selon l'une des revendications 1 à 3, caractérisé par le fait que la largeur (b) des mailles (15) du caillebotis (9) correspond, approximativement, à la hauteur (c) desdites mailles (15) ou à la hauteur dudit caillebotis (9).

5. Dispositif selon l'une des revendications 1 à 5, caçactérisé par le fait que la distance (a), comprise entre le caillebotis (9) et le sol (8), est réglable.

6. Dispositif selon la revendication 2, caractérisé par le fait que la relation 3 m < r < 5 m s'applique au rayon (r) du caillebotis (9).

7. Dispositif selon l'une des revendications 1 à 7, caractérisé par le fait que le caillebotis (9) est placé, au-dessus du sol (8), à une distance (a) obéissant à la relation 50 mm < a < 200 mm et, de préférence, a ≃ 100 mm.
